(19) Europäisches Patentamt
European Patent Office
Office européen des brevets

(11) **EP 4 166 486 A1**

(12) **EUROPEAN PATENT APPLICATION**
published in accordance with Art. 153(4) EPC

(43) Date of publication:
**19.04.2023 Bulletin 2023/16**

(21) Application number: **21821981.4**

(22) Date of filing: **25.03.2021**

(51) International Patent Classification (IPC):
**B65G 54/02** *(2006.01)* **G01N 35/04** *(2006.01)*

(52) Cooperative Patent Classification (CPC):
**B65G 54/02; G01N 35/04**

(86) International application number:
**PCT/JP2021/012505**

(87) International publication number:
**WO 2021/250978 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2020 JP 2020100731**

(71) Applicant: **HITACHI HIGH-TECH CORPORATION**
**Tokyo 105-6409 (JP)**

(72) Inventors:
• **KANEKO Satoru**
**Tokyo 100-8280 (JP)**

• **AOYAMA Yasuaki**
**Tokyo 100-8280 (JP)**
• **HOSHI Ryosuke**
**Tokyo 100-8280 (JP)**
• **TAMAKOSHI Takeshi**
**Tokyo 100-8280 (JP)**
• **KOBAYASHI Hiroyuki**
**Tokyo 100-8280 (JP)**
• **ONIZAWA Kuniaki**
**Tokyo 105-6409 (JP)**

(74) Representative: **Mewburn Ellis LLP**
**Aurora Building**
**Counterslip**
**Bristol BS1 6BX (GB)**

(54) **SPECIMEN CARRYING DEVICE**

(57) Provided is a sample transport device capable of accurately detecting a position of a sample without providing a position sensor.

A sample transport device according to the invention includes: a sample container configured to accommodate a sample and provided with a magnetic body; a transport surface on which the sample container is to be transported; a plurality of coils (25a, 25b) disposed on a surface of the transport surface that is opposite to a surface facing the magnetic body; a coil drive unit (50) configured to apply a voltage to the coils (25a, 25b); and a position estimation unit configured to estimate a position of the sample container based on a current change generated when the coil drive unit (50) applies the voltage to the coils. The position estimation unit estimates the position of the transport container by the coil drive unit applying voltage pulses having a phase difference to adjacent coils among the plurality of coils.

[FIG. 1]

**Description**

Technical Field

The invention relates to a sample transport device.

Background Art

In sample processing devices for a clinical test, a sample such as blood, plasma, serum, urine, or body fluid is evaluated for instructed analysis items. As the sample processing devices, a plurality of devices having respective functions of inspecting the analysis items are connected such that the respective steps can be automatically processed. That is, in order to rationalize operations in a laboratory, analysis units in a plurality of fields of analysis such as biochemistry or immunity are connected through a transport line and operate as one device. In the related art, a belt driving type transport line is mainly used, and when the transport is stopped due to some kind of abnormality during the transport, a sample cannot be supplied to devices provided downstream of the stop position. In addition, the importance of the sample processing has increased due to the advancement of medical care and the development of an aging society. Therefore, in order to improve the processing capacity of the sample processing device, high-speed transport or simultaneous mass transport of samples and the development of a device capable of transport in a plurality of directions are desired.

In order to achieve this object, JP-A-2017-77971 (PTL 1) discloses a laboratory sample distribution system that is highly flexible and offers a high transport performance and an operation method corresponding thereto. The laboratory sample distribution system includes: a plurality of container carriers adapted to carry a sample container, each of the container carriers including at least one magnetically active device, preferably, at least one permanent magnet; a transport plane adapted to carry the container carriers; and a plurality of electromagnetic actuators adapted to apply a magnetic force to the container carriers to move the container carriers on the transport plane, the electromagnetic actuators being stationary disposed below the transport plane.

In addition, JP-A-2017-102103 (PTL 2) discloses a laboratory sample distribution system that has optimized operating parameters regarding a sample distribution system. The laboratory sample distribution system includes a plurality of electromagnetic actuators each of which includes a ferromagnetic core and an excitation winding.

In the transport method and the system, a container carrier detection device is provided to detect the position of the magnetically active device provided in the sample transport carrier. In PTL 1, a sample carrier detection device is provided to detect the presence and the position of the container carrier positioned on the transport plane. In addition, in PTL 2, the laboratory sample distribution system includes the transport plane, and a plurality of electromagnetic actuators are disposed below the transport plane. A plurality of position sensors are distributed on the transport plane. PTL 2 describes that Hall sensors are used as the position sensors.

Citation List

Patent Literature

    PTL 1: JP-A-2017-77971
    PTL 2: JP-A-2017-102103

Summary of Invention

Technical Problem

In the systems disclosed in PTL 1 and PTL 2, a plurality of container carrier detection devices, that is, position sensors are required to transport a large number of samples with high speed, and a decrease in reliability caused by high cost or a malfunction of the detection devices is concerned. Further, when the position sensors are used in PTL 1 and PTL 2, whether or not a sample is present cannot be detected unless the sample approaches the position sensors to some degree. Therefore, a problem may also occur in that the position detection accuracy of the sample is limited.

The invention has been made in order to solve the above-described problems, and an object thereof is to provide a sample transport device capable of accurately detecting a position of a sample without providing a position sensor.

Solution to Problem

In order to achieve the above-described object, according to the invention, there is provided a sample transport device including: a sample container configured to accommodate a sample and provided with a magnetic body; a transport surface on which the sample container is to be transported; a plurality of coils disposed on a surface of the transport surface that is opposite to a surface facing the magnetic body; a coil drive unit configured to apply a voltage to the coils; and a position estimation unit configured to estimate a position of the sample container based on a current change generated when the coil drive unit applies the voltage to the coils, in which the position estimation unit is configured to estimate the position of the transport container by the coil drive unit applying voltage pulses having a phase difference to adjacent coils among the plurality of coils.

A more specific configuration of the invention is described in the claims.

Advantageous Effects of Invention

According to the invention, a sample transport device capable of accurately detecting a position of a sample can be provided without providing a position sensor.

Objects, configurations, and effects other than those described above will be clarified by describing the following embodiments.

Brief Description of Drawings

[FIG. 1] FIG. 1 is a diagram showing a schematic configuration of an embodiment of a sample transport device according to the invention.

[FIG. 2] FIG. 2 is a functional block diagram showing processing contents of a calculation unit 40 in FIG. 1.

[FIG. 3] FIG. 3 is a graph showing a positional characteristic of an inductance of a coil 25.

[FIG. 4] FIG. 4 is a graph showing a positional characteristic of a current change amount of the coil 25.

[FIG. 5] FIG. 5 is a graph showing an example of a waveform of a voltage pulse using a PWM conversion method.

[FIG. 6] FIG. 6 is a graph showing another example of the waveform of the voltage pulse using the PWM conversion method.

[FIG. 7] FIG. 7 is a diagram showing an overall appearance of coils of the sample transport device according to the invention.

[FIG. 8] FIG. 8 is a schematic diagram showing examples of a positional relationship between the coils constituting the sample transport device and a sample.

[FIG. 9] FIG. 9 is a conceptual diagram showing magnetic flux interference between adjacent coils.

[FIG. 10] FIG. 10 is a graph showing an example of a phase relationship of voltage pulses for position detection between adjacent coils.

[FIG. 11] FIG. 11 is a graph showing an example of the phase relationship of the voltage pulses for position detection between adjacent coils.

Description of Embodiments

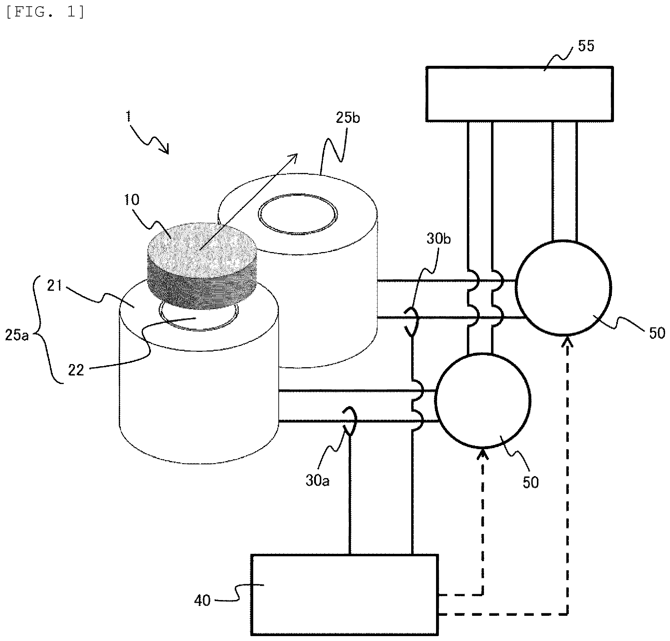

Hereinafter, an embodiment of the invention will be described in detail. First, a schematic configuration of a sample transport device according to the invention will be described using FIG. 1. FIG. 1 is a diagram showing the schematic configuration of the embodiment of the sample transport device according to the invention. As shown in FIG. 1, a sample transport device 1 according to the invention includes: a magnetic body (permanent magnet) 10, a plurality of coils 25a and 25b that are provided to face the magnetic body 10; a coil drive unit 50 that applies a voltage to the coils 25a and 25b; and a calculation unit 40 including a position estimation unit that estimates a position of a permanent magnet 10. Current detectors 30a and 30b are provided between the coils 25a and 25b and the coil drive unit 50. The current detectors 30a and 30b, the calculation unit 40, and the coil drive unit 50 are connected to a power supply 55. Hereinafter, "the sample transport device" will also be abbreviated as "the transport device".

Although not shown in FIG. 1, the permanent magnet 10 is provided in a sample container (transport container) that accommodates a sample to be inspected. In addition, a transport surface is provided between the sample container where the permanent magnet 10 is provided and the coil 25. The coil 25 is configured with a core 22 that is formed of a magnetic body in a cylindrical shape and a winding wire 21 that is wound around an outer circumferential side of the core, and is disposed such that the permanent magnet 10 is positioned on the core 22. By causing a current to flow through the winding wire 21, an electromagnetic force acts on the permanent magnet 10 such that the permanent magnet 10 can move to slide between the plurality of coils 25 through the transport surface. As a result, the sample container is transported up to a desired position.

During this electromagnetic transport, in order to make an electromagnetic force to efficiently act on the permanent magnet 10 and to move the sample container in a desired direction, relative position information regarding the permanent magnet 10 and the coils 25a and 25b is required. For example, in FIG. 1, the permanent magnet 10 is positioned immediately above the coil 25a among the two coils. In this case, however, even when a current flows through the coil 25a, a force in the horizontal direction, that is, in the transport direction is not generated. Conversely, by causing a current to flow through the coil (coil that is not positioned immediately above the permanent magnet 10) 25b adjacent to the coil 25a, a force to attract the permanent magnet 10 to the coil 25b can be generated, and the permanent magnet 10 can be transported in the transport direction (arrow direction in FIG. 1).

That is, when the position of the permanent magnet 10 is grasped and a force (attractive force) to attract the permanent magnet 10 to the coil 25b in the transport direction is generated, the force can be efficiently formed and the direction of the force can be controlled.

It can be seen from the above description that, in order to control an electromagnetic transport device 1, the position of the permanent magnet 10 on the transport surface needs to be detected. Due to the necessity of the position information, as in the related art, a large number of position sensors are disposed on the transport surface to detect the position of the sample container.

Here, as described above, when many position sensors are used, accurate position information can be obtained. However, it is considered that a new substrate on which the position sensors are mounted is required, which brings about an increase in cost or an increase in device size. Accordingly, it is desired to detect the position of the sample container without using the position sensors. As a method for the detection, a method of measuring the inductance of the coil that changes depending on the position of the permanent magnet 10 attached to the sample container is considered. Hereinafter, the position detection method based on the inductance characteristic of the coil will be described.

First, when the permanent magnet 10 is present on the coil 25a on the proximal side of FIG. 1, a magnetic flux formed by the permanent magnet 10 acts on the coil 25a. Here, there is a difference in the size of the magnetic flux to act between the coil 25a close to the permanent magnet 10 and the coil 25b far from the permanent magnet 10. That is, the size of the magnetic flux to act on the coil side changes depending on the relative position between the permanent magnet 10 and the coil. In addition, the core 22 is formed of a magnetic body, and a magnetic flux passing through the core 22 has a characteristic in which the magnetic flux is less likely to pass through the core 22 as the size thereof increases. Here, when a voltage is applied to the winding wire 21 by the coil drive unit 50 such that a current flows therethrough, a magnetic flux is generated by the current in the core 22. Accordingly, a magnetic flux generated by the permanent magnet 10 and a magnetic flux generated by the current flowing through the winding wire 21 are present in the core 22.

In general, when a current flows through the winding wire 21, a magnetic field is generated around the winding wire 21, and the generated magnetic flux is proportional to the current value flowing therethrough. This constant proportionality is called an inductance. However, in a circuit including a magnetic body such as the core 22, the inductance changes depending on magnetic saturation characteristic of the core 22. When magnetic saturation occurs in the core 22, the inductance changes depending on the size of the magnetic flux generated in the core 22. That is, the inductance of the winding wire 21 changes depending on the size of the magnetic flux of the permanent magnet 10. This implies that the inductance of the winding wire 21 changes depending on the position of the permanent magnet 10 (that is, the sample container). Accordingly, as long as the inductance of the winding wire 21 can be measured, the position of the permanent magnet 10 on the transport surface can be detected. Hereinabove, the summary of the position detection method based on the inductance characteristic of the coil is described.

Accordingly, the more specific principle of the position detection method will be described. First, a voltage V generated in the winding wire 21 is represented by the following Expression (1).

$$V = -d\phi/dt \ \ldots \ \text{Expression (1)}$$

Here, $\phi$ represents a magnetic flux, and t represents time. The voltage V is represented by a change amount of the magnetic flux per unit time.

In addition, assuming that I represents a current and L represents an inductance, a relationship of the following Expression (2) is satisfied.

$$dI/dt = (1/L) \times (d\phi/dt) \ \ldots \ \text{Expression (2)}$$

A relationship of the following Expression (3) is satisfied from Expression (1) and Expression (2).

$$dI/dt = -V/L \ldots \text{Expression (3)}$$

That is, when a given voltage is applied to the winding wire 21, as shown in Expression (3), a time change amount of the current I supplied changes depending on the size of the inductance L. This implies that the rise of the current supplied varies when the voltage is applied. Accordingly, when the voltage is applied to the winding wire 21, the inductance L can be obtained by calculation by detecting the change amount (dI/dt) of the current generated in the winding wire 21. That is, as long as the inductance characteristic of the winding wire 21 that changes depending on the position of the permanent magnet 10 can be grasped in advance, the position of the permanent magnet 10, that is, the sample container can be obtained by applying a voltage signal for position detection and by detecting a change amount (dI/dt) of a current generated by the voltage application. With this configuration, the position of the sample container can be grasped without providing a position sensor.

Next, a circuit configuration that implements the method in which a position sensor is not provided will be described. First, as shown in FIG. 1, the coil drive unit 50 is connected to the winding wires 21 of the coils 25a and 25b, and the current detectors 30a and 30b that detect currents flowing through the winding wires 21 are provided in the winding wires 21. In this embodiment, the voltage is applied to the winding wire 21 by the coil drive unit 50, and the current flowing due to the voltage is detected by the current detector 30. Here, the coil drive unit 50 corresponds to a bidirectional chopper or the like that is driven by a PWM (Pulse Width Modulation) signal. In addition, as the current detector 30 that detects a current, a device using a shunt resistor or a current transformer or a device using a Hall current sensor can be used. However, the embodiment is not particularly limited to these devices. The coil drive unit 50 is connected to the power supply 55, and a predetermined current flows through the winding wires 21 of the coils 25a and 25b by performing a duty control on the power supply voltage.

The calculation unit 40 calculates a voltage command that is applied to the coil drive unit 50 to obtain a thrust required for transporting the sample container, measures the inductance (that is, the current change amount dI/dt) of the coil 25 based on the current value detected by the current detector 30, calculates a relative positional relationship between the coil 25 and the permanent magnet 10, and estimates the position of the permanent magnet 10 in the transport device 1. Using the calculated position information of the permanent magnet 10, the calculation unit 40 determines a timing at which a current required for transporting the permanent magnet 10 (sample container) is supplied from the coil drive unit 50 and appropriately supplies the current to the coils 25a and 25b.

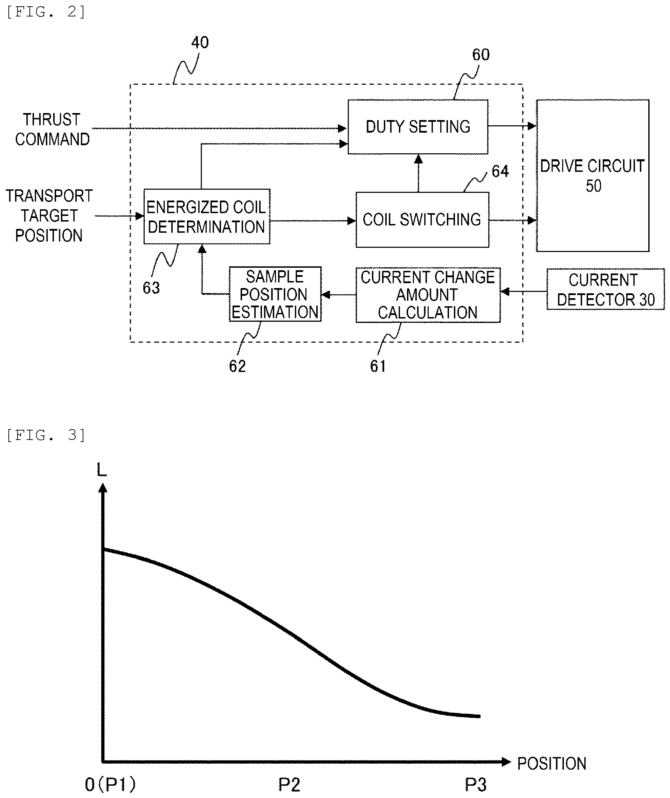

An example of this sample transport control at the time is shown in a block diagram of FIG. 2. FIG. 2 is a functional block diagram showing processing contents of the calculation unit 40 in FIG. 1. As shown in FIG. 2, the calculation unit 40 inputs a thrust command determined depending on a target value of a transport speed of the sample container, determines a voltage pulse signal such as PWM in a duty setting unit 60, and outputs the voltage pulse signal to the coil drive unit 50. At this time, in order to determine which one of the coils 25a and 25b is energized, the current value is input from the current detector 30, the current change amount (dI/dt) of the coil is calculated by a current change amount calculation unit 61, and the position of the sample container is estimated based on the value in a sample position estimation unit 62. Further, the coil to be actually energized is determined in an energized coil determination unit 63 based on a transport target position of the sample and the above-described position of the sample container, and a circuit is switched based on the determined position in a coil switching unit 64 such that the desired coil can be energized. The control blocks described herein can be implemented by an arithmetic device such as a microcomputer.

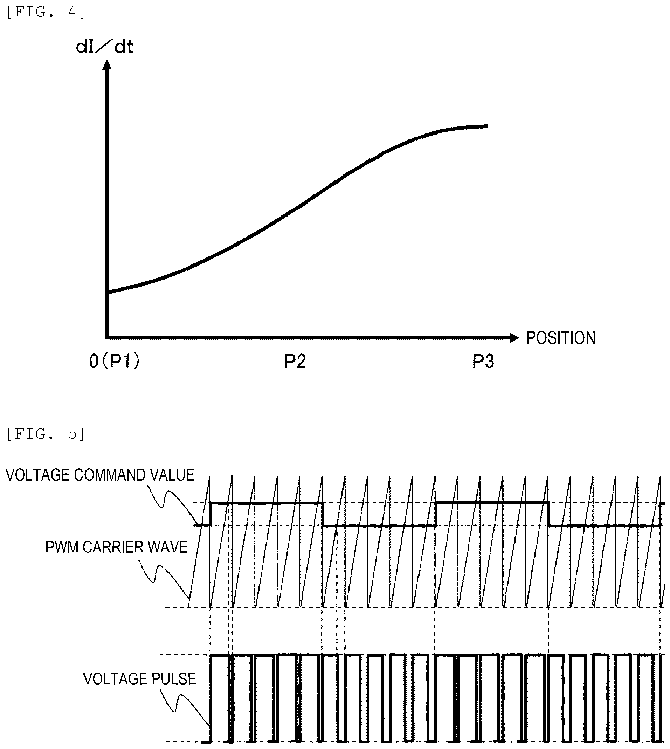

The sample position estimation unit 62 shown in Fig. 2 will be described in detail. In the sample position estimation unit 62, as described above, the current change amount (dI/dt, that is, corresponding to the inductance L of the coils 25a and 25b) is input, and a position estimated value of the sample container is output. FIG. 3 is a graph showing a positional characteristic of the inductance of the coil 25, and FIG. 4 is a graph showing a positional characteristic of the current change amount of the coil 25. In FIG. 3, P3 represents that the permanent magnet 10 is positioned immediately above the coil 25a, and P0 represents that the permanent magnet 10 is moved away from the coil 25a to be positioned above the coil 25b disposed adjacent to the coil 25a. Further, the vertical axis L in FIG. 3 represents the inductance of the coil. It can be seen from this characteristic that, as the position changes from P3 to P0, the inductance increases. This characteristic is a change in an inductance caused due to the action of a magnetic flux generated by energizing the coil 25 and a magnetic flux generated by the permanent magnet 10. In the embodiment, in principle, the position of the sample container is estimated using the positional characteristic of the inductance. Meanwhile, in the actual control logic, the current change amount of the coil is an input. Therefore, in the sample position estimation unit 62, the inductance L is set as a positional characteristic data table of the current change amount (dI/dt) shown in Fig. 4. A relationship between the inductance L and the current change amount (dI/dt) is as described above in Expression (3).

Next, a method of applying a voltage required for detecting the sample container position will be described. FIG. 5 is a graph showing an example of a waveform of a voltage pulse using a PWM conversion method. The voltage pulse shown in Fig. 5 is a voltage signal generated by the PWM conversion method, and the voltage pulse signal is generated by comparing a voltage command value and a PWM carrier. In general, the PWM conversion converts the size of an amplitude into the width of a pulse. Accordingly, the voltage pulse shown in the lower portion of FIG. 5 includes information regarding the voltage command value shown in the upper portion of the drawing. The voltage command value described herein is obtained by adding a voltage for generating a thrust required for transporting the sample container and a voltage pulse for estimating the position of the sample container. When this voltage is applied to the coil 25, a current where an average current for generating a thrust and a current pulsation generated by the pulse are combined is generated.

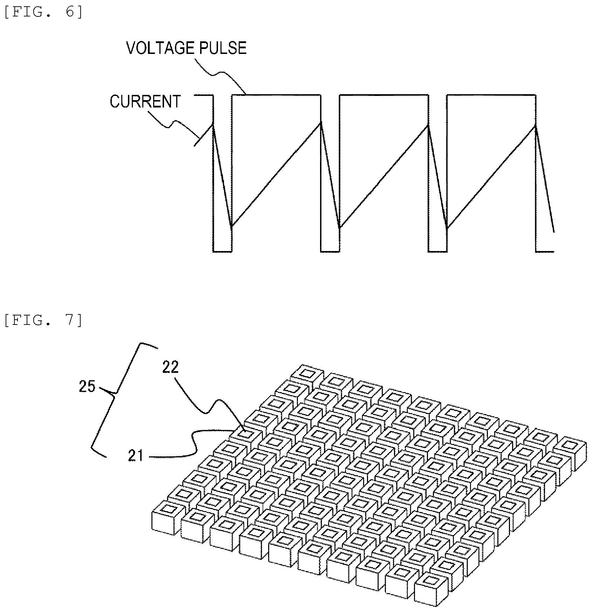

FIG. 5 shows the voltage output method in which a relatively high PWM period and a voltage pulse for position detection as a period lower than the PWM period are output using PWM conversion. However, as long as the sample container can be transported and the current change amount during the transport can be measured, the embodiment is not limited to this method. FIG. 6 is a graph showing another example of the waveform of the voltage pulse using the PWM conversion method. For example, as shown in Fig. 6, the PWM period may be reduced to be the same as the period of the voltage pulse for position detection.

FIG. 7 is a diagram showing an overall appearance of coils of the sample transport device according to the invention. Fig. 1 shows the cylindrical coil. However, the coil shape is not particularly limited to the cylindrical shape and may be a quadrangular prism shape as shown in Fig. 7. As shown in Fig. 7, actually, a large number of coils are disposed in the sample transport device. Depending on a transport path of a sample, the voltage pulse is applied to a coil near the transport path and the sample container among the coils such that the sample transport can be implemented while grasping the sample container position. In the electromagnetic transport device according to the present invention shown in Fig. 7, an increase in the transport capacity of a sample is desired, and mass transport tends to be usual in the future. This way, as the number of samples transported increases, the number of the coils 25 in the sample transport device increases, the interval distance between the plurality of coils decreases, the distance between the samples to be transported decreases, and the possibility that adjacent coils are energized at the same time increases.

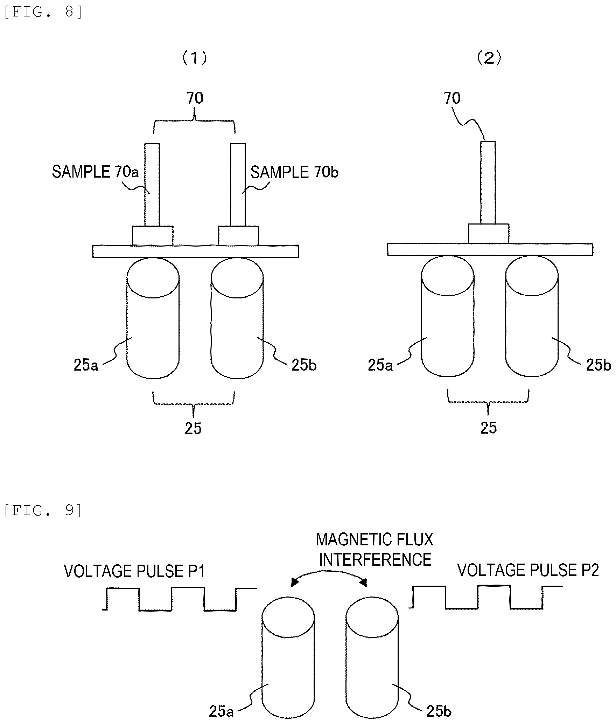

Accordingly, the invention is configured such that magnetic flux interference does not occur between adjacent coils. FIG. 8 is a schematic diagram showing examples of a positional relationship between the coils constituting the sample transport device and a sample, and FIG. 9 is a conceptual diagram showing magnetic flux interference between adjacent coils. In FIG. 8(1), when samples 70a and 70b are present immediately above the two adjacent coils 25a and 25b, respectively, the coils 25a and 25b detect that the samples 70a and 70b are present immediately above the coils 25a and 25b, and are driven to transport the samples. On the other hand, in Fig. 8(2), when the sample 70 is present between the two adjacent coils 25a and 25b, the coils 25a and 25b apply voltage pulses for position detection to each other, and detect that the sample 70 is positioned between the coils.

In this case, as shown in Fig. 9, the coils 25a and 25b apply voltage pulses P1 and P2 to each other and are energized. Therefore, a change in magnetic flux corresponding to the voltage pulse occurs in each of the coils 25a and 25b.

As described above, when the interval between adjacent coils is small, changes in magnetic flux occur in the respective coils, and induced voltages interfere with each other to cause disturbance. In the method according to the invention in which a position sensor is not provided, the voltage pulse for position detection is applied, and the position of a sample is detected based on the current change amount generated by the voltage pulse. Accordingly, when this magnetic interference disturbance occurs, the current change amounts in the adjacent coils 25a and 25b are changed.

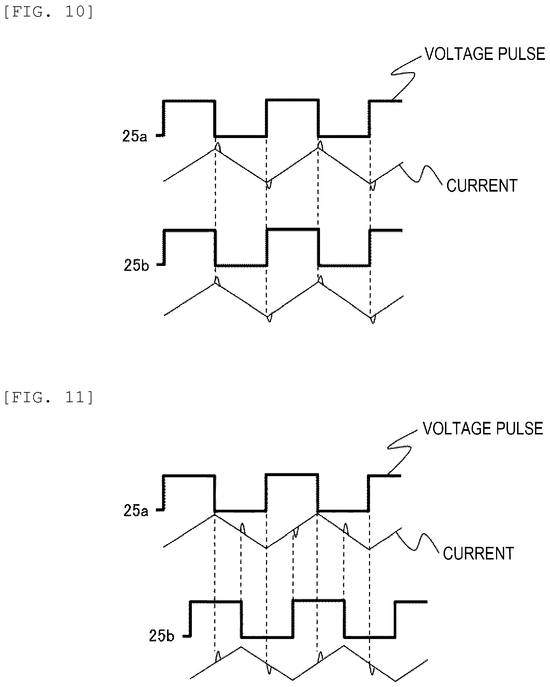

FIGS. 10 and 11 are graphs showing examples of the phase relationship of the voltage pulses for position detection between adjacent coils. For example, as shown in Fig. 10, when voltage pulses having the same phase are applied to adjacent coils, current pulsation occurs due to magnetic interference disturbance, and error may occur in the detection values of the current change amounts generated in the coils. As a result, there is a possibility that error occurs in the estimated value of the sample position, the thrust characteristic deteriorates, and the sample transport capacity decreases.

Accordingly, in order to solve the above-described problem, in the invention, when the voltage pulses for position detection are applied to adjacent coils to energize the coils, it is effective to shift the phases of the voltage pulses for position detection in the adjacent coils from each other as shown in Fig. 11. When the phases of the voltage pulses are shifted from each other as shown in Fig. 11, the voltage of the pulses in one of the coils changes, and when the current change amount at the time is detected, the voltage pulse in the other coil is fixed without a change. Therefore, the influence of detection error on the current change amount during the above-described disturbance by magnetic interference is reduced. The influence of detection error is the minimum when the phase difference of the voltage pulses is 90 degrees as shown in Fig. 11. At this time, the phase difference of the voltage pulses in the adjacent coils does not need to be strictly 90 degrees, and may be set such that the influence of magnetic flux interference on the other coil does not affect the transport performance of samples.

As described above, when the amount of samples transported by the transport device 1 increases in the future, it is considered that a large number of samples are transported, and it is difficult to impart a phase difference at all times such that magnetic flux interference does not occur (affect) between the samples. In this case, in the energized coil determination unit 63 in Fig. 2, a phase difference may be imparted to adjacent coils at the time when it is assumed from information regarding the transport path that the voltage pulses for position detection are subsequently applied to the coils.

With the above-described configuration, the influence of magnetic interference between a plurality of coils is suppressed when the coils are energized to transport a large number of samples, the position estimation accuracy of the sample carrier is ensured, and high-accuracy thrust control of the sample transport device can be implemented.

As described above, according to the invention, a sample transport device capable of accurately detecting a position of a sample can be provided without providing a position sensor.

The present invention is not limited to the embodiment and includes various modification examples.

For example, the embodiments have been described in order to easily understand the present invention, and the present invention is not necessarily to include all the configurations described above. In addition, a part of the configuration of one embodiment can also be replaced with the configuration of another embodiment. Further, the configuration of one embodiment can be added to the configuration of another embodiment. Further, addition, deletion, and replacement of another configuration can also be made for a part of the configuration in each of the embodiments.

Reference Signs List

1 transport device
10 permanent magnet
21 winding wire
22 core
25a, 25b coil
30a, 30b current detector
40 calculation unit
50 coil drive unit
55 power supply
60 duty setting unit
61 current change amount calculation unit
62 sample position estimation unit
63 energized coil determination unit
64 coil switching unit
70a, 70b sample

**Claims**

1. A sample transport device comprising:

   a sample container configured to accommodate a sample and provided with a magnetic body;
   a transport surface on which the sample container is to be transported;
   a plurality of coils disposed on a surface of the transport surface that is opposite to a surface facing the magnetic body;
   a coil drive unit configured to apply a voltage to the coils; and
   a position estimation unit configured to estimate a position of the sample container based on a current change generated when the coil drive unit applies the voltage to the coils, wherein
   the position estimation unit is configured to estimate the position of the sample container by the coil drive unit applying voltage pulses having a phase difference to adjacent coils among the plurality of coils.

2. The sample transport device according to claim 1, wherein
   the phase difference is 90 degrees.

3. The sample transport device according to claim 1 or 2, wherein
   the position estimation unit imparts the phase difference between pulse voltages applied to the adjacent coils at a time when it is assumed that the voltage pulses are simultaneously applied to the adjacent coils in a transport path ahead of the sample container.

[FIG. 1]

[FIG. 2]

[FIG. 3]

[FIG. 4]

[FIG. 5]

[FIG. 6]

VOLTAGE PULSE

CURRENT

[FIG. 7]

25

22

21

EP 4 166 486 A1

[FIG. 8]

（1）

70

SAMPLE 70a        SAMPLE 70b

25a                    25b

25

（2）

70

25a                    25b

25

[FIG. 9]

MAGNETIC FLUX
INTERFERENCE

VOLTAGE PULSE P1                                    VOLTAGE PULSE P2

25a          25b

12

[FIG. 10]

VOLTAGE PULSE

25a

CURRENT

25b

[FIG. 11]

VOLTAGE PULSE

25a

CURRENT

25b

## INTERNATIONAL SEARCH REPORT

| International application No. |
|---|
| PCT/JP2021/012505 |

A. CLASSIFICATION OF SUBJECT MATTER
B65G 54/02(2006.01)i; G01N 35/04(2006.01)i
FI: G01N35/04 G; B65G54/02

According to International Patent Classification (IPC) or to both national classification and IPC

B. FIELDS SEARCHED

Minimum documentation searched (classification system followed by classification symbols)
B65G54/02; G01N35/04

Documentation searched other than minimum documentation to the extent that such documents are included in the fields searched
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-10210:3 A (F. HOFFMANN-LA ROCHE AG) 08 June 2017 (2017-06-08) claims, paragraphs [0028], [0030] | 1-3 |
| Y | JP 5-153704 A (HITACHI, LTD.) 18 June 1993 (1993-06-18) claims, paragraphs [0001]-[0020] | 1-3 |
| A | WO 2019/082750 A1 (PANASONIC IP MANAGEMENT CO., LTD.) 02 May 2019 (2019-05-02) entire text all drawings | 1-3 |
| A | WO 2019/225284 A1 (PANASONIC IP MANAGEMENT CO., LTD.) 28 November 2019 (2019-11-28) entire text all drawings | 1-3 |
| A | JP 5-176414 A (MITSUBISHI HEAVY INDUSTRIES, LTD.) 13 July 1993 (1993-07-13) entire text all drawings | 1-3 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 April 2021 (26.04.2021) | 11 May 2021 (11.05.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

14

**INTERNATIONAL SEARCH REPORT**

| International application No. |
|---|
| PCT/JP2021/012505 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 62-114402 A (SHINKO ELECTRIC CO., LTD.) 26 May 1987 (1987-05-26) entire text all drawings | 1-3 |
| A | JP 10-206104 A (MACOME CORPORATION) 07 August 1998 (1998-08-07) entire text all drawings | 1-3 |

Form PCT/ISA/210 (continuation of second sheet) (January 2015)

**INTERNATIONAL SEARCH REPORT**
Information on patent family members

| International application No. |
|---|
| PCT/JP2021/012505 |

| Patent Documents referred in the Report | Publication Date | Patent Family | Publication Date |
|---|---|---|---|
| JP 2017-102103 A | 08 Jun. 2017 | US 2017/0101277 A1 claims, paragraphs [0038], [0041] EP 3156352 A1 CN 106896232 A | |
| JP 5-153704 A | 18 Jun. 1993 | (Family: none) | |
| WO 2019/082750 A1 | 02 May 2019 | (Family: none) | |
| WO 2019/225284 A1 | 28 Nov. 2019 | (Family: none) | |
| JP 5-176414 A | 13 Jul. 1993 | (Family: none) | |
| JP 62-114402 A | 26 May 1987 | (Family: none) | |
| JP 10-206104 A | 07 Aug. 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017077971 A

- JP 2017102103 A